# EUROPEAN PATENT APPLICATION

(11) **EP 4 832 413 A1**
(43) Date of publication of application: **28.10.2026**
(21) Application number: 26173141.8
(22) Date of filing: 17.04.2026
(51) Int. Cl.: H04L 9/08, G06F 7/58, H04L 9/30, H04L 9/32

(54) **SEED SELECTION FOR CRYPTOGRAPHIC DEVICE REBOOT**

(30) Priority: 24.04.2025 US 202519189005
(71) Applicant: Microsoft Technology Licensing, LLC, Redmond, WA 98052 (US)
(72) Inventor: BISHEH NIASAR, MOJTABA, Redmond, 98052 (US); SONI, VISHAL, Redmond, 98052 (US); PILLILLI, BHARAT S., Redmond, 98052 (US)
(74) Representative: CMS Cameron McKenna Nabarro Olswang LLP

(57) **Abstract**

A method of manufacturing a cryptographically enabled device includes iteratively selecting an initial unique device secret (UDS) seed for a cryptographically enabled device, performing cryptographic signature generation based on the initial UDS seed, tracking performance of the cryptographic signature generation, and comparing performance of the cryptographic signature generation to a performance threshold until comparing identifies an optimal UDS seed. Once the optimal seed is identified in the above iteration, the optimal UDS seed is fused into the cryptographically enabled device.

## Description

### BACKGROUND

The rise of quantum computing introduces new challenges to the security of cryptographic systems. As a result, Post-Quantum Cryptography (PQC) has emerged as a strategic response to safeguard cloud infrastructure against quantum-based threats. Within the spectrum of PQC, lattice-based cryptosystems are gaining prominence for their resilience against both classical and quantum computational attacks.

However, the shift to PQC is not without its hurdles. One of the most significant obstacles is the variability in signing operation durations due to differences in input seeds, which contrast sharply with the constant-time characteristics of traditional algorithms such as Elliptic Curve Cryptography (ECC).

### SUMMARY

A method of manufacturing a cryptographically enabled device includes iteratively selecting an initial unique device secret (UDS) seed for a cryptographically enabled device, performing cryptographic signature generation based on the initial UDS seed, tracking performance of the cryptographic signature generation, and comparing performance of the cryptographic signature generation to a performance threshold until comparing identifies an optimal UDS seed. Once the optimal seed is identified in the above iteration, the optimal UDS seed is fused into the cryptographically enabled device.

### BRIEF DESCRIPTION OF THE DRAWINGS

FIG. 1 is a block flow diagram of a method performed during manufacturing of a device incorporating cryptographic functions according to an example embodiment.
FIG. 2 illustrates a device that includes an optimal unique device secret (UDS) seed that is used during a secure reboot process according to an example embodiment.
FIG. 3 is a block diagram of a cryptographically enabled device interfacing with a manufacturing server during UDS selection and installation according to an example embodiment.
FIG. 4 is a flowchart illustrating a method of identifying and storing optimal UDS seeds in a cryptographic device during manufacture according to an example embodiment.
FIG. 5 is a block schematic diagram of a computer system to implement one or more example embodiments.

### DETAILED DESCRIPTION

In the following description, reference is made to the accompanying drawings that form a part hereof, and in which is shown by way of illustration specific embodiments which may be practiced. These embodiments are described in sufficient detail to enable those skilled in the art to practice the invention, and it is to be understood that other embodiments may be utilized and that structural, logical and electrical changes may be made without departing from the scope of the present invention. The following description of example embodiments is, therefore, not to be taken in a limited sense, and the scope of the present invention is defined by the appended claims.

In a mutual authentication scenario, each device involved in the mutual authentication must have a unique identity. This identity is set in the factory. Generating an identity remotely exposes the device to identity theft by bad actors impersonating a server.

Unique device secret (UDS) seeds form the bedrock of device security, providing a cryptographic key or value that is unique to each device. The device UDS seed value is securely stored, typically in non-volatile memory such as fuse banks. The UDS seed serves to generate device-specific identifiers and cryptographic keys, which are crucial for secure boot processes. Within frameworks like DICE (Device Identifier Composition Engine), the UDS seed enables the creation of a trustworthy and recoverable device identity, with deterministic signatures ensuring the continuity of the trust chain.

The advent of quantum computing, however, brings significant risks to cryptographic methods that use a UDS seed. PQC algorithms, designed to counteract quantum threats, introduce new complexities. Unlike traditional algorithms, PQC methods often exhibit variable latencies during signing operations due to the inherent nature of certain algorithms, such as ML-DSA. ML-DSA refers to the Module-Lattice-Based Digital Signature Algorithm, a post-quantum digital signature scheme standardized by a National Institute of Standards and Technology (NIST) (Federal Information Processing Standards (FIPS) 204) specification and is believed to be secure against at least some quantum computer attacks.

Booting involves the generation of signatures using the UDS seed. If signature generation takes a variable amount of time, some boot times may be longer than desired. The variable latencies in signature generation pose challenges to the DICE, which relies on fixed boot-times for secure initialization.

The ML-DSA algorithm integrates a validity check into its signing process. If the check fails, the signature generation must be repeated, leading to the possibility of continuous loops in the worst-case scenario. The unpredictability of this process complicates efforts to design systems with guaranteed boot-time performance, a critical factor in cloud-based applications.

Based on the ML-DSA specification, the success rate for signature generation using UDS seeds and validity checking is as follows: ${e}^{- n ⋅ β \left(l/{γ}_{1}+k/{γ}_{2}\right)}$

ML-DSA parameters are listed in Table 1 as follows:

**Table 1**

| Parameter | MLDSA-87 |
|---|---|
| *n* | 256 |
| *q* | 8380417 |
| *β* | 120 |
| *l* | 7 |
| *k* | 8 |
| *γ*₁ | 2¹⁹ |
| *γ₂* | (*q* - 1)/32 |

Using these parameters, success rates for the first 15 rounds of signing operations is shown in Table 2:

**Table 2**

| Rounds | Cumulative Success Rate |
|---|---|
| 1 | 25.9611% |
| 2 | 45.1823% |
| 3 | 59.4136% |
| 4 | 69.9502% |
| 5 | 77.7515% |
| 6 | 83.5274% |
| 7 | 87.8039% |
| 8 | 90.9701% |
| 9 | 93.3144% |
| 10 | 95.0500% |
| 11 | 96.3351% |
| 12 | 97.2865% |
| 13 | 97.9910% |
| 14 | 98.5125% |
| 15 | 98.8987% |

An improved method for selecting an optimal UDS seed for PQC systems reduces signing times while maintaining the high security and performance required for cloud infrastructure.

The improved method optimizes a seed generation process, a critical step in cryptographic device security. The method uses a re-seeding mechanism aimed at identifying an optimal UDS seed, which allows for faster and more consistent signature generation. The method, for example, streamlines boot operations without compromising security.

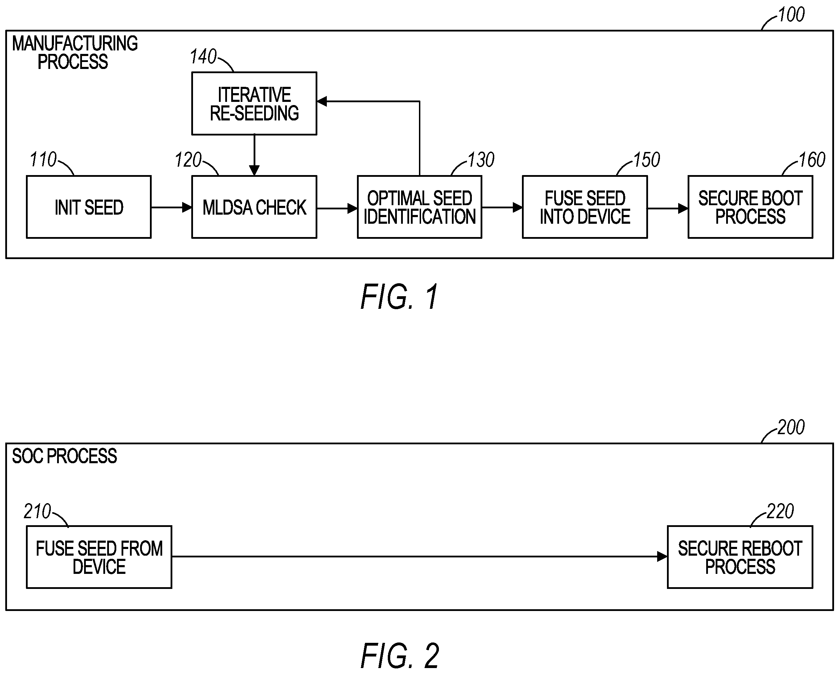

FIG. 1 is a block flow diagram of a method 100 performed during manufacturing of a device incorporating ML-DSA functions. At 110, an initial UDS seed is selected. The initial seed may be randomly selected from a set of 256 bit, or greater, seeds. Since some seeds may be rejected during method 100, a larger seed may be used to increase the number of available seeds thereby increasing security of the seed.

ML-DSA is then performed at 120 by the device using the initial seed 110 combined with a zeroed nonce where nonce values are set to zeros. The number of signatures generated during ML-DSA signature generation or the time required to generate a successful signature is tracked and provided to an optimal seed identification operation 130. Operation 130 will check the tracked number of signatures needed to be generated to find a valid signature or time required to find a valid signature against a threshold. The threshold in one example may be set to two or three signature generations or the corresponding time it should take for two or three signature generations. In further examples, more signature generations such as three or four or more may be selected as desired. The threshold should not be set so high as to interfere with booting the device after the device is operational.

Method 100 identifies the seed that, when combined with a zeroed nonce, consistently produces a successful signature. If operation 130 determines that the resulting UDS seed is not optimal, an iterative reseeding operation 140 is performed. Iterative reseeding provides a new randomly selected initial UDS seed for checking at operation 120. Operations 120, 130, and 140 are iteratively repeated until an optimal UDS seed is identified based on the threshold comparison. The term "optimal" is used to describe a UDS seed that produces a valid signature within the threshold. This optimal UDS seed is fused into the device fuses or ROM at operation 150 and a secure boot process based on the fused optimal seed is performed at 160 as a final check to ensure successful booting occurs within a desired amount of time.

By systematically testing potential seed candidates during the manufacturing flow, an optimal seed is identified that reduces the time required for signature generation. Selecting optimized UDS seeds ensures that a private key, derived from the optimal seed, consistently yields successful digital signatures with minimal attempts.

The refinement of the UDS seed is performed during the manufacturing phase, where testing identifies the seed that, when combined with a zeroed nonce, consistently produces a successful signature. This testing procedure guarantees that devices will experience fast boot times post-manufacture, eliminating the need for further testing or seed regeneration during operation. After the optimal seed is identified and fused into the device, it guarantees quick and secure boot-ups, essential for the efficient performance of cloud infrastructure.

FIG. 2 illustrates a device 200 that includes an optimal UDS seed 210 that is used during a secure reboot process 220. The reboot process 220 may occur during startup following installation of the device 200 or may occur following a firmware update.

The one-time testing and UDS seed assignment during manufacturing ensures that every device is equipped with a pre-tested, optimized UDS seed, guaranteeing efficient cryptographic operations even in the presence of post-quantum-era challenges.

The assigned UDS seed not only accelerates boot times but also contributes to the long-term operational efficiency of cloud systems, where high availability and minimal downtime are paramount. In further examples, one device may be used to generate multiple optimal UDS seeds which are then assigned to further devices being manufactured. Alternatively, each device may be used to generate its own optimal UDS seed. In still further examples, a simulation of method 100 may be used to generate optimal UDS seeds.

By integrating an efficient seed selection method within the manufacturing flow, devices consistently achieve faster boot times while maintaining the highest levels of security providing a significant advantage for cloud infrastructure, where both speed and security are critical. The method is a key step in future-proofing devices against the uncertainties introduced by quantum computing, ensuring that the cryptographic technologies of tomorrow are as secure and efficient as possible.

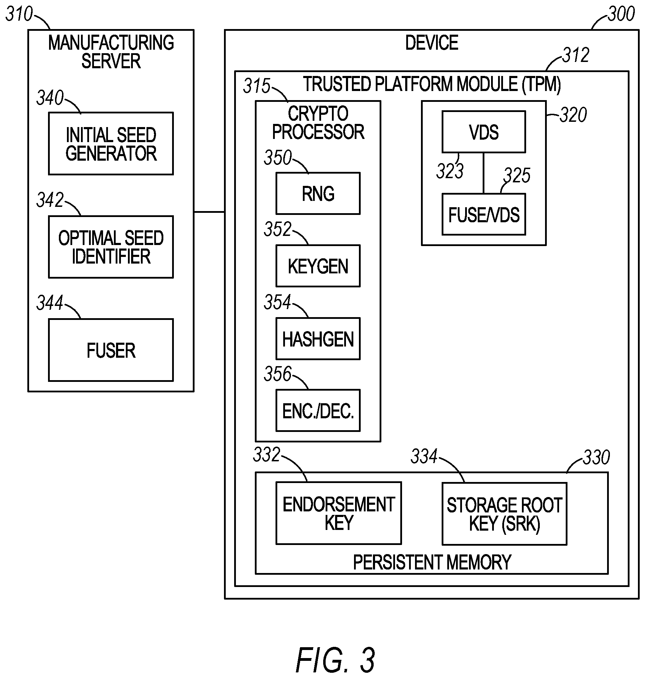

FIG. 3 is a block diagram of a cryptographically enabled device 300 interfacing with a manufacturing server 310 during UDS selection and installation. Device 300 includes a root of trust (RoT) or trusted platform module (TPM) 312 communicatively coupled to manufacturing server 310. TPM 312 includes a secure crypto-processor 315 that implements the International Organization for Standards (ISO)/International Electrotechnical Commission (IEC) 11889 standard in one example. Common uses for the TPM 312 include verifying that the boot process starts from a trusted combination of hardware and software and storing disk encryption keys.

The TPM 312 serves as the foundational security element for the device 300. The TPM 312 is responsible for storing and protecting cryptographic keys and identities and providing safe cryptographic services to different clients, such as by crypto-processor 315.

The TPM 312 is an SoC, a chip, that includes a variety of communicatively coupled hardware elements. The TPM 312 as illustrated includes a versatile memory 320, crypto-processor 315, and a persistent memory, such as a fuse 325.

The TPM 312 further includes a persistent memory 330 that includes an endorsement key (EK) 332 and a storage root key 334. The EK 332 is a pair of public/private keys, of which the private key is embedded in the TPM 312 and *never* leaves it. The public EK is contained in a certificate and is only used in a limited number of procedures. The reason for limiting the use of the EK 332 is because the EK 332 is unique to each TPM 312 and consequently may be used to identify the device 300. Therefore, to protect user privacy when interacting with other entities, the use of the EK 332 is restricted and internally generated aliases, the keys, and other identities in the versatile memory 320 are used for more routine transactions.

The manufacturing server 310 performs portions of method 100 and will provide the optimal UDS for storing in tamper resistant persistent memory before shipping the device 300.

Manufacturing server 310 includes an initial seed generator 340 for generating initial UDS seeds 323 on which to perform the ML-DSA check via crypto-processor 315 during a boot operation. Optimal seed identifier 342 is used to perform optimal UDS seed identification by determining if a valid signature can be generated within a desired time period, and fuser 344 will store the UDS seed 323 in fuse 325.

The storage root key (SRK) 334 is also stored in the persistent memory 330. This key also never leaves this secure storage during normal operation. A third type of key, the Attestation Identity Key (AIK), the keys in the versatile memory 320, may also be stored within the TPM 312. These keys may be regarded as an alias for the EK 332. Each TPM 312 can support many AIKs, thus the user can have many unlinkable keys that can be used to maintain anonymity between different service providers who require proof of identity. These AIKs must, therefore, be persistent and although they could be stored on the TPM 312 non-volatile memory, for practical reasons the standards recommend keeping the AIK keys in secure external storage. The TPM 312, however, provides a volatile storage area where one or more AIK keys can be loaded when in use.

Crypto-processor 315 may include a random number generator (RNG) 350, a key generator 352, a hash generator 354, and an encryption/decryption engine 356. Hash generator 354 can, for example, generate secure hash algorithm (SHA)-2 cryptographic hashes or other cryptographic hashes. The hash generator 354 hashes the input data and produces a digest. The hash generator 354 also forms the basis of an Hash Based Message Authentication Code (HMAC) engine, and is used in a number of cryptographic procedures carried out by the TPM 312, for example: in the computation of digital signatures, including during boot operations, and for creating key objects where a hash of the key may be required as part of an integrity protection mechanism.

The key generator 352 generates cryptographic keys suitable for use with the TPM 312. ML-DSA may be utilized for both key generation and for data signing. The key generation performed by the key generator 352 can be a computationally intensive task and since such keys are widely used in the TPM 312, for signing and providing secure storage, the standard specifies that the TPM 312 should include a module specifically for this task. ML-DSA can also be used for key generation, signature generation, and signature validation. Maintaining the principle of key separation, the TPM 312 uses dedicated signing keys for signing data, and separate storage key pairs for encryption and decryption by the encryption/decryption engine 356.

The UDS seed can be stored in a memory location that is associated with the fuse 325. Fuses in memory devices are small, programmable storage elements that can be set to a specific state (typically on or off) and then retain that state even when power is removed. The fuse 325 can be electrically programmable by the fuser 344 of the manufacturing server 310 and located in a specific section of non-volatile memory and consist of a few registers, where each bit represents a different fuse setting.

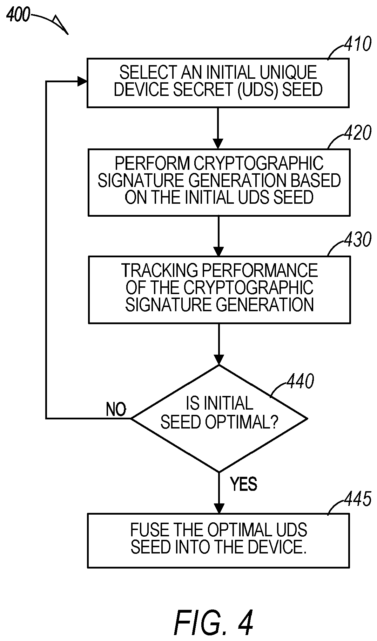

FIG. 4 is a flowchart illustrating a method 400 of identifying and storing optimal UDS seeds in a cryptographic device during manufacture. Method 400 begins at operation 410 by selecting an initial unique device secret (UDS) seed for a cryptographically enabled device. The initial UDS seed may be provided by a random number generator (RNG) external to the device, such as by a manufacturing server. The device is then booted and performs cryptographic signature generation during the boot operation based on the initial UDS seed. Performance of the cryptographic signature generation is tracked at operation 430 and compared to a performance threshold at operation 440 to determine if the initial seed is optimal. If after one iteration of operations 410, 420 and 430 the initial seed has performance within the threshold, the initial seed is optimal and is stored fused at operation 440 into the device. If the initial seed is not optimal at operation 440, processing returns to operation 410 to select another initial seed. The iteration of initial seed selection and signature generation is repeated until an optimal seed is identified at operation 440 and stored at operation 450.

In one example, the device performs operation 420 and also part of operation 430, tracking the number of iterations or time required to generate a valid signature giving an initial UDS seed. The manufacturing server may then receive the performance information and perform operation 440 to determine whether or not to perform another iteration or store the identified optima UDS seed. The manufacturing server can also perform operation 430 by tracking the time taken for the device to generate a valid signature.

In a further example, the cryptographic signature generation operation 420 performed by the device is itself iterative, as multiple signatures may be generated prior to a signature being validated. These rounds of signature generation and validation operations may be counted or timed by the device during operation 420 and compared to a desired optimal performance of rounds or times referred to as a threshold. If exceeded, the cryptographically enabled device itself may stop the signature generation operation 420, effectively performing operations 430 and 440, and request a new initial UDS seed at operation 410 from the server as opposed to reporting the performance to the server at operation 430. Such a shortcut may save time in finding optimal UDS seeds by cutting operation 430 short once the threshold number of rounds is met or exceeded without successfully finding an optimal UDS seed.

In one example, the performance threshold is set to a selected number of rounds of signature generation, such as 2 or 3, or more rounds.

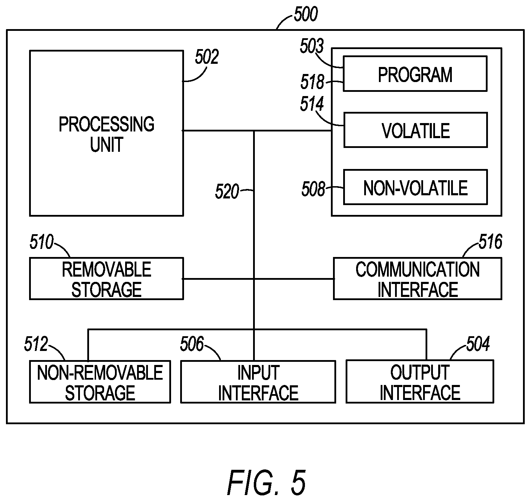

FIG. 5 is a block schematic diagram of a computer 500 for implementing devices and manufacturing servers for identifying optimal UDS seeds during manufacture of devices and for performing methods and algorithms according to example embodiments. All components need not be used in various embodiments.

One example computing device in the form of a computer 500 may include a processing unit 502, memory 503, removable storage 510, and non-removable storage 512. Although the example computing device is illustrated and described as computer 500, the computing device may be in different forms in different embodiments. For example, the computing device may instead be a smartphone, a tablet, smartwatch, smart storage device (SSD), or other computing device including the same or similar elements as illustrated and described with regard to FIG. 5. Devices, such as smartphones, tablets, and smartwatches, are generally collectively referred to as mobile devices or user equipment.

Although the various data storage elements are illustrated as part of the computer 500, the storage may also or alternatively include cloud-based storage accessible via a network, such as the Internet or server-based storage. Note also that an SSD may include a processor on which the parser may be run, allowing transfer of parsed, filtered data through I/O channels between the SSD and main memory.

Memory 503 may include volatile memory 514 and non-volatile memory 508. Computer 500 may include - or have access to a computing environment that includes - a variety of computer-readable media, such as volatile memory 514 and non-volatile memory 508, removable storage 510 and non-removable storage 512. Computer storage includes random access memory (RAM), read only memory (ROM), erasable programmable read-only memory (EPROM) or electrically erasable programmable read-only memory (EEPROM), flash memory or other memory technologies, compact disc read-only memory (CD ROM), Digital Versatile Disks (DVD) or other optical disk storage, magnetic cassettes, magnetic tape, magnetic disk storage or other magnetic storage devices, or any other medium capable of storing computer-readable instructions.

Computer 500 may include or have access to a computing environment that includes input interface 506, output interface 504, and a communication interface 516. Output interface 504 may include a display device, such as a touchscreen, that also may serve as an input device. The input interface 506 may include one or more of a touchscreen, touchpad, mouse, keyboard, camera, one or more device-specific buttons, one or more sensors integrated within or coupled via wired or wireless data connections to the computer 500, and other input devices. The computer may operate in a networked environment using a communication connection to connect to one or more remote computers, such as database servers. The remote computer may include a personal computer (PC), server, router, network PC, a peer device or other common data flow network switch, or the like. The communication connection may include a Local Area Network (LAN), a Wide Area Network (WAN), cellular, Wi-Fi, Bluetooth, or other networks. According to one embodiment, the various components of computer 500 are connected with a system bus 520.

Computer-readable instructions stored on a computer-readable medium are executable by the processing unit 502 of the computer 500, such as a program 518. The program 518 in some embodiments comprises software to implement one or more methods described herein. A hard drive, CD-ROM, and RAM are some examples of articles including a non-transitory computer-readable medium such as a storage device. The terms computer-readable medium, machine readable medium, and storage device do not include carrier waves or signals to the extent carrier waves and signals are deemed too transitory. Storage can also include networked storage, such as a storage area network (SAN). Computer program 518 may be used to cause processing unit 502 to perform one or more methods or algorithms described herein.

### Examples:

A method of manufacturing a cryptographically enabled device includes iteratively selecting an initial unique device secret (UDS) seed for a cryptographically enabled device, performing cryptographic signature generation based on the initial UDS seed, tracking performance of the cryptographic signature generation, and comparing performance of the cryptographic signature generation to a performance threshold until comparing identifies an optimal UDS seed. Once the optimal seed is identified in the above iteration, the optimal UDS seed is fused into the cryptographically enabled device.
2. The method of example 1 wherein signature generation includes one or more rounds of signature generation.
3. The method of example 2 wherein the performance threshold is set to a selected number of rounds of signature generation.
4. The method of example 3 wherein the performance threshold is set to 2 rounds of signature generation.
5. The method of example 3 wherein the performance threshold is set to 3 rounds of signature generation.
6. The method of any of examples 1-5 wherein the method is performed by the cryptographically enabled device.
7. The method of example 6 wherein the method is performed by the cryptographically enabled device during a boot operation.
8. The method of any of examples 1-7 wherein fusing the optimal UDS seed into the device comprises fusing the optimal UDS seed into a fused memory location of the cryptographically enabled device.
9. The method of any of examples 1-8 wherein signature generation is based on initial UDS seed and zeroed nonce during a boot operation of the cryptographically enabled device.
10. The method of any of examples 1-9 wherein the signature generation comprises a Module-Lattice-Based Digital Signature Algorithm (ML-DSA).
11. The method of any of examples 1-10 wherein each initial UDS seed is generated by a random number generator external to the cryptographically enabled device.
12. A method includes the steps of a. receiving an initial unique device secret (UDS) seed for a cryptographically enabled device, b. performing cryptographic signature generation in the cryptographically enabled device based on the initial UDS seed, c. tracking performance of the cryptographic signature generation; d. comparing performance of the cryptographic signature generation to a performance threshold, e. repeating steps a, b, c, and d until step d identifies an optimal UDS seed, and f. fusing the optimal UDS seed into the cryptographically enabled device.
13. The method of example 12 wherein signature generation includes one or more rounds of signature generation.
14. The method of example 13 wherein the performance threshold is set to a selected number of rounds of signature generation.
15. The method of example 14 wherein the method is performed by the cryptographically enabled device during a boot operation and wherein the performance threshold is set to 2 or 3 rounds of signature validation.
16. The method of any of examples 12-15 wherein fusing the optimal UDS seed into the device comprises fusing the optimal UDS seed into a fused memory location of the cryptographically enabled device.
17. The method of any of examples 12-16 wherein signature generation is based on initial UDS seed and zeroed nonce during a boot operation of the cryptographically enabled device.
18. The method of any of examples 12-17 wherein the signature generation comprises a Module-Lattice-Based Digital Signature Algorithm (ML-DSA).
19. The method of any of examples 12-18 wherein each initial UDS seed is generated by a random number generator external to the cryptographically enabled device.
20. A method includes the steps of: a. receiving an initial unique device secret (UDS) seed for a cryptographically enabled device, b. performing cryptographic signature generation using a Module-Lattice-Based Digital Signature Algorithm (ML-DSA) in the cryptographically enabled device based on the initial UDS seed, wherein a variable number of rounds of signature generation and validity checking are performed to generate a successful signature, c. tracking a number of signatures rounds of cryptographic signature generation performed to generate the successful signature, d. comparing the number of rounds of performance of the cryptographic signature generation to a performance threshold number of rounds, e. performing steps a, b, c, and d until step d identifies an optimal UDS seed identified by the number of rounds being less than or equal to the performance threshold number of rounds, and f. fusing the optimal UDS seed into the cryptographically enabled device. The functions or algorithms described herein may be implemented in software in one embodiment. The software may consist of computer executable instructions stored on computer readable media or computer readable storage device such as one or more non-transitory memories or other type of hardware-based storage devices, either local or networked. Further, such functions correspond to modules, which may be software, hardware, firmware or any combination thereof. Multiple functions may be performed in one or more modules as desired, and the embodiments described are merely examples. The software may be executed on a digital signal processor, ASIC, microprocessor, or other type of processor operating on a computer system, such as a personal computer, server or other computer system, turning such computer system into a specifically programmed machine.

The functionality can be configured to perform an operation using, for instance, software, hardware, firmware, or the like. For example, the phrase "configured to" can refer to a logic circuit structure of a hardware element that is to implement the associated functionality. The phrase "configured to" can also refer to a logic circuit structure of a hardware element that is to implement the coding design of associated functionality of firmware or software. The term "module" refers to a structural element that can be implemented using any suitable hardware (e.g., a processor, among others), software (e.g., an application, among others), firmware, or any combination of hardware, software, and firmware. The term, "logic" encompasses any functionality for performing a task. For instance, each operation illustrated in the flowcharts corresponds to logic for performing that operation. An operation can be performed using, software, hardware, firmware, or the like. The terms, "component," "system," and the like may refer to computer-related entities, hardware, and software in execution, firmware, or combination thereof. A component may be a process running on a processor, an object, an executable, a program, a function, a subroutine, a computer, or a combination of software and hardware. The term, "processor," may refer to a hardware component, such as a processing unit of a computer system.

Furthermore, the claimed subject matter may be implemented as a method, apparatus, or article of manufacture using standard programming and engineering techniques to produce software, firmware, hardware, or any combination thereof to control a computing device to implement the disclosed subject matter. The term, "article of manufacture," as used herein is intended to encompass a computer program accessible from any computer-readable storage device or media. Computer-readable storage media can include, but are not limited to, magnetic storage devices, e.g., hard disk, floppy disk, magnetic strips, optical disk, compact disk (CD), digital versatile disk (DVD), smart cards, flash memory devices, among others. In contrast, computer-readable media, i.e., not storage media, may additionally include communication media such as transmission media for wireless signals and the like.

Although a few embodiments have been described in detail above, other modifications are possible. For example, the logic flows depicted in the figures do not require the particular order shown, or sequential order, to achieve desirable results. Other steps may be provided, or steps may be eliminated, from the described flows, and other components may be added to, or removed from, the described systems. Other embodiments may be within the scope of the following claims.

## Claims

1. A method (400) comprising:
iteratively performing:
selecting (410) an initial unique device secret, UDS, seed (323) for a cryptographically enabled device (300);
performing (420) cryptographic signature generation based on the initial UDS seed;
tracking (430) performance of the cryptographic signature generation; and
comparing (440) performance of the cryptographic signature generation to a performance threshold until comparing identifies an optimal UDS seed; and
fusing (445) the optimal UDS seed into the cryptographically enabled device.

2. The method of claim 1 wherein signature generation includes one or more rounds of signature generation.

3. The method of claim 2 wherein the performance threshold is set to a selected number of rounds of signature generation.

4. The method of claim 3 wherein the performance threshold is set to 2 rounds of signature generation.

5. The method of claim 3 wherein the performance threshold is set to 3 rounds of signature generation.

6. The method of any one of claims 1-5 wherein the method is performed by the cryptographically enabled device (300).

7. The method of claim 6 wherein the method is performed by the cryptographically enabled device during a boot operation (160).

8. The method of any one of claims 1-5 wherein fusing the optimal UDS seed into the device comprises fusing the optimal UDS seed into a fused memory location (150) of the cryptographically enabled device.

9. The method of any one of claims 1-5 wherein signature generation is based on initial UDS seed and zeroed nonce during a boot operation of the cryptographically enabled device.

10. The method of any one of claims 1-5 wherein the signature generation comprises a Module-Lattice-Based Digital Signature Algorithm, ML-DSA.

11. The method of any one of claims 1-5 wherein each initial UDS seed is generated by a random number generator (340) external to the cryptographically enabled device.

12. A method (400) comprising the steps of:
a receiving (410) an initial unique device secret, UDS, (323) seed for a cryptographically enabled device (300);
b performing (420) cryptographic signature generation in the cryptographically enabled device based on the initial UDS seed;
c tracking (430) performance of the cryptographic signature generation;
d comparing (440) performance of the cryptographic signature generation to a performance threshold;
e repeating steps a, b, c, and d until step d identifies an optimal UDS seed; and
f fusing (445) the optimal UDS seed into the cryptographically enabled device.

13. The method of claim 12 wherein signature generation includes one or more rounds of signature generation.

14. The method of claim 13 wherein the performance threshold is set to a selected number of rounds of signature generation.

15. The method of claim 14 wherein the method is performed by the cryptographically enabled device during a boot operation and wherein the performance threshold is set to 2 or 3 rounds of signature generation.
